# EUROPEAN PATENT APPLICATION

(11) **EP 3 093 488 A1**
(43) Date of publication of application: **16.11.2016**
(21) Application number: 15167654.1
(22) Date of filing: 13.05.2015
(51) Int. Cl.: F03G 6/06, F01K 3/12, F22B 1/00

(54) **THERMAL SOLAR POWER PLANT COMPRISING A HEAT STORAGE ASSEMBLY AND CORRESPONDING METHOD**

(71) Applicant: Areva Solar, Inc, Santa Clara, CA 95054 (US)
(72) Inventor: Lebreton, Solenne, 13790 Peynier (FR); Peter, Emmanuelle, 78810 Feucherolles (FR)
(74) Representative: Lavoix

(57) **Abstract**

The thermal solar power plant comprises a turbine (4) for generating electricity using vapor of a working fluid, a superheating assembly (8) comprising solar vapor superheaters (14, 16, 18) fluidly connected in series for superheating vapor using insolation and feeding the turbine with superheated vapor, and a heat storage assembly (10) thermally coupled to the superheating assembly (8) by at least one heat exchanger (30, 32) provided between two superheaters of the superheating assembly (8) in such manner as to take heat from superheated vapor and store heat.

## Description

The present invention relates to the field of thermal solar power plants, using insolation to heat a working fluid, namely water, such as to produce vapor, and using vapor to generate electrical power, e.g. using a vapor turbine, in particular a steam turbine.

A drawback of producing electricity in a thermal solar power plant resides in the fact that insolation varies. No solar radiations are available overnight and insolation varies during the day due to the sun's motion and due to changing meteorological conditions (sunny conditions or cloudy conditions). This impacts continuity of electric energy production.

In view of obviating this drawback, it is possible to store thermal energy in excess during periods of high insolation and to recover thermal energy during periods of low insolation for producing steam, such as to ensure a better continuity in electric energy production

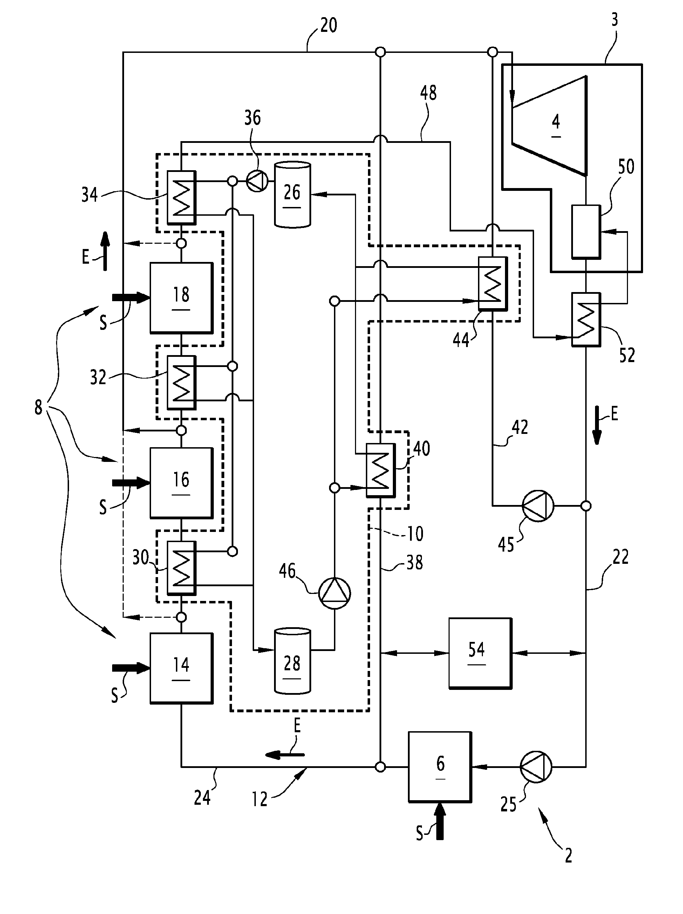

WO2013/018014A1 discloses on Figure 8 a thermal solar power plant comprising a steam turbine, a solar collection assembly for producing superheated steam using insolation and a heat exchange assembly for exchanging heat with a heat storage assembly. The heat exchanger assembly is connected in the water circuit in parallel to the solar collection assembly.

During periods of high insolation, superheated steam produced by the solar collection system is directed to the steam turbine for producing electricity and/or to the heat exchanger assembly for storing heat in the heat storage assembly.

During periods of low insolation, water is directed towards the heat exchanger assembly for recovering heat from the heat storage assembly and producing steam, with by-passing the solar collection assembly.

One of the objects of the invention is to propose a direct vapor thermal solar power plant allowing a better efficiency of the thermal solar power plant.

To this end, the invention proposes a thermal solar power plant comprising a turbine for generating electricity using vapor of a working fluid, a superheating assembly comprising solar vapor superheaters fluidly connected in series for superheating vapor using insolation and feeding the turbine with superheated vapor, and a heat storage assembly thermally coupled to the superheating assembly by at least one heat exchanger provided between two superheaters of the superheating assembly in such manner as to take heat from superheated vapor and store heat.

In specific embodiments, the solar power plant may comprise one or several of the following optional features, taken in isolation or in any technically feasible combination:
- the solar power plant is configured for feeding the turbine with at least a portion of vapor exiting a superheater;
- the heat storage assembly comprises a cold reservoir and a hot reservoir containing a heat storage fluid, the heat storage assembly being configured for transferring the heat storage fluid from the cold reservoir to the hot reservoir with passing through at least one heat exchanger provided between two superheaters;
- the solar power plant is configured for superheating the vapor using heat stored in the heat storage assembly and feeding the turbine with the vapor with by-passing the superheaters;
- the solar power plant comprises at least one by-pass line for by passing the superheating assembly, the heat storage assembly being thermally coupled to the by-pass line by a heat exchanger;
- the solar power plant comprises a direct solar vapor generator configured for evaporating the working fluid using solar insolation, the upstream superheater of the superheating assembly being fluidly connected to the vapor generator for receiving vapor;
- the solar power plant is configured for evaporating the working fluid using heat stored in the heat storage assembly with by-passing the vapor generator and the superheating assembly ;
- the solar power plant comprises at least one by-pass line for by passing the vapor generator and the superheaters, the heat storage assembly being thermally coupled to the by-pass line;
- the solar power plant comprises a latent heat storage device fluidly connected such as to receive vapor for storing latent heat;
- the heat storage assembly is thermally coupled to the superheating assembly by a heat exchanger provided downstream each superheater;
- the solar power plant is configured for recirculating at least a portion of vapor exiting a downstream superheater of the superheating assembly with by-passing the turbine.

The invention also relates to a method of producing electricity comprising the steps of producing superheated vapor using several direct solar vapor superheaters fluidly connected in series, feeding at least a portion of the superheated vapor produced by at least one of the superheaters to a steam turbine for producing electricity, taking heat from superheated vapor between two superheaters, storing the heat in a heat storage assembly, and retrieving heat stored in the heat storage assembly to produce vapor.

The invention and its advantages will be better understood upon reading to following description, given solely by way of example and made with reference to the appended drawing in which the unique Figure is a diagrammatical view of a direct thermal solar power plant.

The direct thermal solar power plant 2 illustrated on the Figure comprises a power block 3 having a vapor turbine 4 for producing electricity using vapor, a direct solar vapor generator 6 for producing vapor using insolation S, a direct solar vapor superheating assembly 8 for superheating vapor using solar insolation S and a heat storage assembly 10 for taking and storing heat from superheated vapor.

The solar power plant 2 comprises a working fluid circuit 12 fluidly connecting the power block 3, the vapor generator 6 and the superheating assembly 8.

The vapor generator 6 is configured for producing vapor by heating the working fluid using concentrated solar insolation. In the vapor generator 6 the working fluid circulates through tubes with being subjected to concentrated solar insolation produced by a concentrating reflector for evaporating the working fluid or superheating the vapor.

The superheating assembly 8 comprises several direct solar superheaters 14, 16, 18 for superheating the vapor using concentrated solar insolation. In the superheaters 14, 16, 18, the working fluid circulates through tubes with being subjected to concentrated solar insolation produced by a concentrating reflector for evaporating the working fluid or superheating the vapor.

The superheaters 14, 16, 18 are fluidly connected in series. Each following superheater 16, 18 receives vapor from the preceding superheater 14, 16. The upstream superheater 14 is fluidly connected to the vapor generator 6 for receiving vapor produced by the vapor generator 6.

The turbine 4 is fed with vapor exiting at least one part of the superheaters 14, 16, 18. The turbine 4 is here fed with vapor exiting an intermediate superheater, here the second superheater 16. In alternative, the turbine 4 is fed with vapor from the first superheater 14 or vapor from the last superheater 18 (as illustrated in dotted lines on the Figure).

The working fluid circuit 12 is configured for feeding the superheating assembly 8 with vapor produced by the vapor generator 6, for feeding the turbine 4 with superheated vapor produced by the superheating assembly 8 and for returning the working fluid exiting the turbine 4 to the vapor generator 6, in closed loop.

The working fluid circuit 12 comprises a turbine feeding line 20 extending from the superheating assembly 8 to the inlet of turbine 4 for feeding the turbine 4, a return line 22 for collecting working fluid exiting the turbine 4 an returning the fluid to the vapor generator 6 and a superheater feeding line 24 extending from the vapor generator 6 to the superheating assembly 8 for feeding the upstream superheater 14 with vapor produced by the vapor generator 6.

The working fluid circuit 12 comprises a pump 25 for circulating the working fluid, namely successively through the vapor generator 6, at least one of the superheaters 14, 16, 18 and the turbine 4, in closed loop.

The heat storage assembly 10 comprises a cold reservoir 26 and a hot reservoir 28 containing a heat storage fluid and is configured for transferring a heat storage fluid between the cold reservoir 26 and the hot reservoir 28.

The heat storage assembly 10 is thermally coupled to the superheating assembly 8 such as to take heat from superheated vapor and transfer that heat to the heat storage fluid.

The heat storage assembly 10 is thermally coupled to the superheating assembly 8 by at least one heat exchanger 30, 32 connected in series between two adjacent superheaters 14, 16, 18 to take heat from superheated vapor exiting the upstream one of the two superheaters 14, 16.

The heat storage assembly 10 is further thermally coupled to the superheating assembly 8 by a heat exchanger 34 arranged downstream the last superheater 18 of the series.

The solar power plant comprises superheaters 14, 16 and 18 and heat exchangers 30, 32, 34 arranged in series and alternately. The heat storage assembly 10 comprises a heat exchanger 30, 32, 34 downstream each superheater 14, 16, 18. A heat exchanger 30, 32 is provided between each pair of adjacent superheaters 14, 16, 18 connected in series. The heat exchangers 30, 32, 34 are fluidly connected in parallel between the cold reservoir 26 and the hot reservoir 28 for transferring the heat storage fluid from the cold reservoir 26 to the hot reservoir 28 with passing through one or several of the heat exchangers 30, 32, 34.

A pump 36 is arranged to circulate the heat storage fluid from the cold reservoir 26 to the hot reservoir 28 with passing through one or several of the heat exchangers 30, 32, 34.

The heat storage assembly 10 is preferably a sensible heat storage assembly configured to store heat in the form of sensible heat in the heat storage fluid. The heat storage fluid is for example a molten salt.

The working fluid circuit 12 is configured for feeding the turbine 4 with vapor exiting the vapor generator 6 and heated by heat recovered from the heat storage assembly 10, with by-passing the superheaters 14, 16, 18.

The working fluid circuit 12 comprises a superheating by-pass line 38 connecting the outlet of the vapor generator 6 to the inlet of the turbine 4 with by-passing the superheaters 14, 16, 18 and the heat storage assembly 10 is thermally coupled to the superheating by-pass line 38 by a heat exchanger 40 provided on the superheating by-pass line 38 for transferring heat from the heat storage fluid to the working fluid.

The superheating by-pass line 38 connects the superheater feeding line 24 to the turbine feeding line 20 with by-passing the superheaters 14, 16, 18

The working fluid circuit 12 is configured for feeding the turbine 4 with vapor produced by heating the working fluid using the heat stored in the heat storage assembly 10 with by-passing the vapor generator 6 and the superheaters 14, 16, 18.

The working fluid circuit 12 comprises a vapor generator by-pass line 42 extending between the outlet of the turbine 4 and the inlet of the turbine 4 with by-passing the vapor generator 6 and the superheaters 14, 16, 18 and the heat storage assembly 10 is thermally coupled to the vapor generator by-pass line 42 by a heat exchanger 44 provided on the vapor generator by-pass line 42 for transferring heat from the heat storage fluid to the working fluid.

The vapor generator by-pass line 42 connects the return line 22 to the turbine feeding line 20 with by-passing the vapor production assembly, i.e. the vapor generator 6 and the superheaters 14, 16, 18.

The working fluid circuit 12 comprises an auxiliary pump 45 for circulating the working fluid in the vapor generator by-pass line 42 and the turbine 4 in closed loop.

The heat exchangers 40, 44 are fluidly connected in parallel to the cold reservoir 26 and the hot reservoir 28 for circulating heat storage fluid from the hot reservoir 28 to the cold reservoir 26 with passing through one or both heat exchangers 40, 44.

The heat storage assembly 10 comprises a pump 46 arranged for circulating the working fluid from the hot reservoir 28 to the cold reservoir 26 with passing through one or both heat exchangers 40, 44.

In the embodiment illustrated on the Figure, working fluid exiting the heat exchanger 34 provided downstream the last superheater 18 is used for preheating working fluid (in particular feedwater) exiting the turbine 4.

The working fluid circuit 12 comprises a recirculation line 48 extending from the heat exchanger 34 to a preheating heat exchanger 52.

Preferably, the working fluid circuit 12 comprises a condenser 50 arranged the outlet of the turbine 4 and the vapor exiting the preheating heat exchanger 52 downstream the last superheater 18 and heat exchanger 34 is returned to the condenser 50.

The condenser 50 is for example integrated in the power block 3 comprising the turbine 4. The power block 3 is illustrated schematically. In practice, the power block 3 may comprises several turbine outlets at different pressure and temperatures and the power plant 2 may correspondingly comprise several preheating heat exchangers.

Preferably, the working fluid circuit 12 comprises a preheating heat exchanger 52 arranged for transferring heat from the working fluid exiting heat exchanger 34 to the working fluid feeding the vapor generator 6 before feeding the working fluid exiting the heat exchanger 52 to condenser 50.

The preheating heat exchanger 52 is provided between the recirculation line 48 and the return line 22. The preheating heat exchanger 52 is provided on the return line 22 between the condenser 50 and the vapor generator 6

Optionally, the solar power plant 2 comprises a latent heat storage device 54 for storing heat from vapor produced by the vapor generator 6 and retrieving heat for producing vapor.

The latent heat storage device 54 is connected between the return line 22 and the superheater by-pass line 38.

The latent heat storage device 54 is adapted to store heat in a heat storing material in the form of latent heat. The material is a phase change material which changes phase (solid/liquid/gas) upon storing heat or delivering heat.

The operation of the solar power plant 2 and its various operating modes will now be described.

During a period of high insolation, the working fluid is circulated in the working fluid circuit 12 such as to pass successively through the vapor generator 6, through at least one of the superheaters 14, 16, 18 and the turbine 4. In the illustrated example, the working fluid feeding the turbine 4 passes in series through two superheaters 14, 16 before feeding the turbine 4 (see arrows E).

The working fluid is transformed into vapor in the vapor generator 6 using insolation and is superheated in the superheater(s) using insolation and the superheated steam is fed to the turbine 4. The turbine 4 produces electricity.

The heat storage assembly 10 is operated to withdraw heat from the superheated vapor using the heat exchangers 30, 32, 34 arranged in series with the superheaters 14, 16, 18.

To this end, the pump 36 is controlled to circulate the heat storage fluid from the cold reservoir 26 to the hot reservoir 28 with passing through the heat exchangers 30, 32, 34.

The vapor passing alternately through the superheaters 14, 16, 18 and the heat exchangers 30, 32, 34 is successively heated using insolation in the superheaters 14, 16, 18 and cooled by transferring heat to the heat storage fluid in the heat exchangers 30, 32, 34.

This allows generating heat as sensible heat in the superheaters 14, 16, 18 and retrieving this sensible heat from the working fluid for storing a great amount of heat in the heat storage assembly 10 during periods of high insolation.

The turbine 4 is fed with a portion of vapor exiting one of the superheaters 14, 16, 18 (here the second superheater 16) the other portion of vapor exiting the steam superheater feeding the superheater(s) and the heat exchanger(s) located downstream.

Vapor exiting the last superheater 18 (or at least a portion thereof) is used to preheat the working fluid feeding the vapor generator 6 in the preheating heat exchanger 52 and is returned into the condenser 50.

Optionally, a portion of the vapor generated by the vapor generator 6 is circulated through the latent heat storage device 54 for storing latent heat.

During a period of low insolation, if insolation is sufficient for producing vapor but insufficient for superheating the vapor, the working fluid circuit is controlled to by-pass the superheaters.

The working fluid circulates from the vapor generator 6 to the turbine 4 with passing through the superheater by-pass line 38. Vapor produced by the vapor generator 6 is superheated in the heat exchanger 40 using the sensible heat stored in the heat storage assembly 10. The pump 46 of the heat storage assembly 10 is controlled for circulating the heat storage fluid from the hot reservoir 28 to the cold reservoir 26 with passing through the heat exchanger 40.

Optionally, a portion of the vapor generated by the vapor generator 6 is circulated through the latent heat storage device 54 for storing latent heat.

During a period of very low insolation, if insolation is insufficient for producing vapor using insolation, the solar power plant 2 is controlled for producing vapor and for superheating the vapor using the heat stored in the heat storage assembly 10.

The working fluid is circulated through the vapor generator by-pass line 42 and through the heat exchanger 44 and the heat storage assembly 10 is controlled to flow the heat storage fluid from the hot reservoir 28 to the cold reservoir 26 with passing through the heat exchanger 44.

Optionally, in one operation mode, the superheated vapor can be produced by generating vapor in the latent storage device 54 and superheating the vapor in the heat exchanger 40 using the sensible heat stored in the heat storage assembly 10.

Owing to the invention, during periods of high insolation, it is possible simultaneously to feed the turbine 4 with vapor and to charge a large amount of sensible heat in the heat storage assembly 10, and then, during period of low insolation, to discharge the heat storage assembly 10 to generate vapor, thus improving the continuity of electrical energy production.

If the vapor generated by the solar vapor generator 6 and the solar superheating assembly 8 is not sufficient to run the turbine 4 at nominal load, additional superheated vapor can be produced by using the heat storage assembly 10 in parallel to the superheating assembly 8 and/or by using the latent storage device 54 and the heat storage assembly 10 in parallel to the vapor generator 6 and the superheating assembly 8.

The use of heat exchangers arranged between superheaters provided in series allows producing a great amount of sensible heat to be stored in the heat storage medium.

In addition, the superheaters produce superheated vapor at different pressures and it is possible to select the superheater having the most appropriate vapor pressure to feed the turbine, thus enhancing efficiency of the turbine.

Preferably, the superheater 16 feeding the turbine 4 is chosen as a superheater having an outlet pressure matching the pressure obtained when discharging the heat storage assembly 10, i.e. when evaporating and superheating the working fluid using the heat stored in the heat storage assembly 10.

Even when discharging heat using both sensible heat storage assembly 10 and latent storage device, the nominal pressure of the turbine can be reached. The pressure loss between the vapor generator 6 and the superheater 16 feeding the turbine 6 can indeed match the pressure loss between charge and discharge of the latent storage device 54.

In a particular embodiment, the working fluid is water. The vapor is thus steam, and the superheated vapor is superheated steam. The turbine is a steam turbine.

The vapor generator 6 may comprise on receiver or a plurality of receivers arranged in parallel in the working fluid circuit. Similarly, each superheater 14, 16, 18 may comprise one or several receivers in parallel in the fluid circuit.

In the Figure, the solar power plant 2 comprises one assembly of superheaters comprising superheaters with heat exchangers of the heat storage assembly 10 provided downstream superheaters.

Optionally, the solar power plant 2 comprises several such assemblies of superheaters arranged in parallel between the vapor generator 6 and the turbine 4, each assembly of superheaters comprising several superheaters in and the heat storage assembly comprising heat exchangers provided downstream superheaters.

The superheating assembly may comprise two, three or more superheaters connected in series. The turbine is fed with the steam from the first superheater, the steam from an intermediate superheater or the steam of the last superheater of the series. The assembly of superheaters may comprise one or several groups each formed of a superheater and a heat exchanger downstream the superheater (e.g. superheater 14 and heat exchanger 30) upstream the superheater feeding the turbine (superheater 16) and/or one or several groups each formed of a superheater and a heat exchanger downstream the superheater (e.g. superheater 18 and heat exchanger 34) downstream the superheater (superheater 16) feeding the turbine 4.

Optionally, during turbine start up, if insolation is not sufficient for feeding the turbine 4, it is possible to disable heat exchanger(s) 30 arranged upstream the superheater 16 feeding the turbine 4 and to use the superheaters 16 feeding the turbine 4 and the superheater(s) 14 located upstream to superheat the vapor at appropriate conditions and thus start the turbine 4 sooner.

In one embodiment, the turbine is fed with steam exiting the last superheater of the series, namely with the entire steam exiting the last superheater of the series.

## Claims

1. Thermal solar power plant comprising a turbine (4) for generating electricity using vapor of a working fluid, a superheating assembly (8) comprising solar vapor superheaters (14, 16, 18) fluidly connected in series for superheating vapor using insolation and feeding the turbine with superheated vapor, and a heat storage assembly (10) thermally coupled to the superheating assembly (8) by at least one heat exchanger (30, 32) provided between two superheaters of the superheating assembly (8) in such manner as to take heat from superheated vapor and store heat.

2. Solar power plant according to claim 1, configured for feeding the turbine (4) with at least a portion of vapor exiting a superheater (16).

3. Solar power plant according to claim 1 or 2, the heat storage assembly (10) comprising a cold reservoir (26) and a hot reservoir (28) containing a heat storage fluid, the heat storage assembly (10) being configured for transferring the heat storage fluid from the cold reservoir to the hot reservoir with passing through at least one heat exchanger (30, 32) provided between two superheaters (14, 16, 18).

4. Solar power plant according to any one of the preceding claims, configured for superheating the vapor using heat stored in the heat storage assembly (10) and feeding the turbine (4) with the vapor with by-passing the superheaters (14, 16, 18).

5. Solar power plant according to any one of the preceding claims, comprising at least one by-pass line (38) for by passing the superheating assembly (8), the heat storage assembly (10) being thermally coupled to the by-pass line by a heat exchanger (42).

6. Solar power plant according to any one of the preceding claims, comprising a direct solar vapor generator (6) configured for evaporating the working fluid using solar insolation, the upstream superheater of the superheating assembly being fluidly connected to the vapor generator (6) for receiving vapor.

7. Solar power plant according to claim 6, configured for evaporating the working fluid using heat stored in the heat storage assembly (10) with by-passing the vapor generator and the superheating assembly (8).

8. Solar power plant according to claim 6 or 7, comprising at least one by-pass line for by passing the vapor generator (6) and the superheating assembly (8), the heat storage assembly being thermally coupled to the by-pass line by a heat exchanger.

9. Solar power plant according to any preceding claim, comprising a latent heat storage device (54) fluidly connected to receive vapor such as to store latent heat.

10. Solar power plant according to any preceding claim, wherein the heat storage assembly (10) is thermally coupled to the superheating assembly by a heat exchanger provided downstream each superheater (14, 16, 18).

11. Solar power plant according to any preceding claims, configured for recirculating at least a portion of vapor exiting the downstream superheater (18) of the superheating assembly (8) with by-passing the turbine (4).

12. Method of producing electricity comprising the steps of:
- producing superheated vapor using several direct solar vapor superheaters fluidly connected in series;
- feeding at least a portion of the superheated vapor produced by at least one of the superheaters to a steam turbine for producing electricity;
- taking heat from superheated vapor between two superheaters;
- storing the heat in a heat storage assembly; and
- retrieving heat stored in the heat storage assembly to produce vapor.
